# EUROPÄISCHE PATENTSCHRIFT

(11) **EP 1 101 025 B1**
(45) Veröffentlichungstag und Bekanntmachung des Hinweises auf die Patenterteilung: **14.07.2004**
(21) Anmeldenummer: 00941994.6
(22) Anmeldetag: 27.05.2000
(51) Int. Cl.: F02B 75/04, F02B 67/06

(54) **KETTENSPANNER FÜR EINE KOLBENBRENNKRAFTMASCHINE MIT VARIABLEM BRENNRAUM**
CHAIN ADJUSTER FOR INTERNAL COMBUSTION PISTON ENGINE WITH VARIABLE COMBUSTION CHAMBER
TENDEUR DE CHAINE DESTINE A UN MOTEUR THERMIQUE A PISTONS ET CHAMBRE DE COMBUSTION VARIABLE

(30) Priorität: 01.06.1999 DE 19925268
(43) Veröffentlichungstag der Anmeldung: 23.05.2001
(73) Patentinhaber: FEV Motorentechnik GmbH, 52078 Aachen (DE)
(72) Erfinder: YAPICI, Kurt, Imren, D-52249 Eschweiler (DE)
(74) Vertreter: Langmaack, Jürgen
(86) Internationale Anmeldenummer: PCT/EP2000/004854
(87) Internationale Veröffentlichungsnummer: WO 2000/073641

(56) Entgegenhaltungen:
- WO-A-94/00679
- DE-U- 29 719 343
- FR-A- 991 130
- FR-A- 2 746 848

## Beschreibung

Bei einer Kolbenbrennkraftmaschine besteht über eine Veränderung des Brennraums die Möglichkeit, die Betriebsbedingungen an den jeweiligen Lastfall optimal anzupassen. Eine Veränderung des Brennraums ist beispielsweise möglich durch ein Anheben oder Absenken der Kurbelwellendrehachse gegenüber einer motorfesten Bezugsebene. Bei dieser Veränderung der Höhenlage der Kurbelwelle gegenüber der motorfesten Bezugsebene ändert sich aber auch die Position der Kurbelwellendrehachse zur Drehachse der nachgeschalteten, in ihrer Höhenlage motorfest angeordneten Abtriebswellen, beispielsweise der Nockenwelle und der Wellen etwaiger Nebenaggregate. Eine derartige Kolbenbrennkraftmaschine ist aus DE 297 19 343 U bekannt.

Das Problem besteht nun darin, daß beide Wellen trotz der einstellbaren Veränderung der Höhenlage der Kurbelwelle zur Bezugsebene im gleichem Drehsinn und insbesondere mit gleicher Drehzahl umlaufen müssen.

Aus WO 94/00679 ist eine Kolbenbrennkraftmaschine bekannt, die zur Veränderung des Brennraums zur Anpassung an unterschiedliche Betriebsbedingungen konzipiert ist. Bei dieser Bauform ist die Kurbelwelle in einem mit dem Fahrzeug fest verbundenen Rahmen ortsfest gelagert. Der Motorblock mit den Zylindern und dem Zylinderkopf ist in diesem Rahmen mit Hilfe eines Stellantriebs linear verschiebbar gelagert, so daß durch eine Verschiebung des Motorblocks insgesamt relativ zur ortsfesten Kurbelwelle und damit zu den Kolben das Brennraumvolumen verändert werden kann. Zum Antrieb der Nockenwelle ist an der Kurbelwelle ein Antriebsrad vorgesehen, dem am Motorblock ein Zwischenrad zugeordnet ist. Das Antriebsrad an der Kurbelwelle und das Zwischenrad sind über eine Kette miteinander verbunden. Vom Zwischenrad wird über einen weiteren Kettentrieb das Drehmoment für die Betätigung der Nockenwellen abgenommen.

Um bei einer Verschiebung des Motorblocks gegenüber der Kurbelwelle die sich aus den Abstandsänderungen ergebenden Auswirkungen auf die Antriebskette ausgleichen zu können, sind zwei parallele und spiegelsymmetrisch zur Bewegungsachse angeordnete Ausgleichsräder vorgesehen, über die die Kette geführt ist. Die beiden Ausgleichsräder sind jeweils auf einem Arm gelagert, der mit einem Ende am feststehenden Rahmen und mit dem anderen Ende am Motorblock angelenkt ist, so daß bei einer Verstellung des Motorblocks gegenüber dem Rahmen die beiden Ausgleichsräder entsprechend zwangsgeführt werden und so die Eingriffsbedingungen für die Antriebskette aufrechterhalten werden.

Aus FR-2 746 848 A ist eine Kolbenbrennkraftmaschine bekannt, die ein am Fahrzeug gelagertes schalenförmiges Rahmengehäuse aufweist, in dem die Kurbelwelle ortsfest gelagert ist und in dem der Motorblock über ein Stellmittel linear relativ zur ortsfesten Drehachse der Kurbelwelle verschiebbar ist. Um bei dieser Konstruktion die Auswirkungen der Abstandsänderungen zwischen der anzutreibenden, am verschiebbaren Motorblock gelagerten Nockenwelle und der am schalenförmigen Rahmengehäuse ortsfest gelagerten Kurbelwelle auf die Antriebskette auszugleichen, ist seitlich an einem Kettentrum ein am verschiebbaren Motorblock gelagertes Umlenkrad und mit Abstand hierzu ein am schalenförmigen Rahmengehäuse gelagertes Umlenkrad vorgesehen. Bei einer Relativverschiebung zwischen schalenförmigem Gehäuse und Motorblock ändert sich die Umschlingung der Ausgleichsräder, wobei die Umschlingung des mit der Nockenwelle verbundenen Abtriebsrades erhalten bleibt.

Der Erfindung liegt nun die Aufgabe zugrunde, für eine Kolbenbrennkraftmaschine der vorstehend bezeichneten Art den Antrieb von zusätzlichen Abtriebswellen, beispielsweise einer oder mehrerer Nockenwellen sowie von Nebenaggregaten, wie beispielsweise Kühlwasserpumpe, Lichtmaschine oder dergl. mit Hilfe eines Kettentriebes vorzunehmen, der unmittelbar mit der Kurbelwelle in Verbindung steht.

Diese Aufgabe wird gemäß der Erfindung mit den im Anspruch 1 angegebenen Merkmalen gelöst. Mit Hilfe einer derartigen Anordnung ist es möglich, trotz der nicht unbeträchtlichen Abstandsänderungen, die bei einer Verlagerung der Kurbelwelle zur Veränderung des Brennraumes vorgenommen werden, weiterhin mit Hilfe eines Kettentriebes im Motorgehäuse ortsfest angeordnete Abtriebswellen anzutreiben. Durch die Anordnung eines Spannrades, das entsprechend proportional zur Lageveränderung der Kurbelwelle bewegbar geführt ist, besteht die Möglichkeit, den Kettentrieb immer in der erforderlichen Spannung zu halten. Die Übertragungseinrichtung kann hierbei durch einen eigenen Stellantrieb geführt werden, der entsprechend der Verstellung des Stellantriebes zur Veränderung der Position der Kurbelwelle nachgeführt wird. Ein Kettentrieb im Sinne der vorliegenden Erfindung umfaßt sowohl eine sogenannte Steuerkette aus Metall als auch einen sogenannten Zahnriemen.

Gemäß einer Ausgestaltung der Erfindung ist vorgesehen, daß die Übertragungseinrichtung mit dem Stellantrieb zur Veränderung der Position der Drehachse der Kurbelwelle gekoppelt ist. Damit werden die Kräfte zur Betätigung des Spannrades unmittelbar von diesem Stellantrieb abgenommen. Die Rückstellkräfte des Kettentrums auf das anliegende Spannrad wirken hierbei in Richtung der zur Kurbelwellenverlagerung aufzubringenden Stellkräfte, so daß die aufzubringenden Verstellenergien entsprechend reduziert werden.

In einer anderen Ausgestaltung ist vorgesehen, daß die Übertragungseinrichtung über Verstellmittel mit einem der Exzenterringe mechanisch gekoppelt ist. Diese Anordnung bietet den Vorteil, daß der im Motorgehäuse an einer Endseite in einem Traglager angeordnete Exzenterring unmittelbar zum Abgriff der Verstellkräfte für die Bewegung des Spannrades genutzt werden kann und zwar unabhängig von der Ausbildung und Ausgestaltung des Stellantriebs zur Veränderung der Position der Drehachse der Kurbelwelle. Bei entsprechender Gestaltung der Ankopplung können die Kettenspannkräfte die auf den Exzenter wirkenden Gaskräfte zu einem Teil kompensieren

In besonders vorteilhafter Ausgestaltung der Erfindung ist vorgesehen, daß die Übertragungseinrichtung durch eine Schwenkhebelanordnung gebildet wird, bei der die Schwenkbewegung von einem Exzenterring abgenommen wird. Diese Anordnung bietet den Vorteil, daß über eine Anpassung der Hebelverhältnisse die erforderliche proportionale Bewegung des Spannrades durchgeführt werden kann. Durch eine entsprechende Gestalung der Schwenkhebelanordnung ist es möglich, unterschiedliche Kettenspannungen bei unterschiedlichen Betriebspunkten in Abhängigkeit von der jeweiligen Epsilonstellung an einer Kolbenbrennkraftmaschine mit veränderbarem Brennraum einzustellen. Das führt dazu, daß der Kettentrieb nur so stark gespannt wird, wie es für den jeweiligen Betriebspunkt notwendig ist, so daß sich die Lebensdauer der Kette verlängert.

In weiterer vorteilhafter Ausgestaltung der Erfindung ist vorgesehen, daß zwischen Spannrad und Übertragungseinrichtung ein federndes Dämpfungselement angeordnet ist. Hierdurch können nicht nur geringfügige Abweichungen zwischen den Verstellwegen der Kurbelwelle einerseits und den Stellwegen des Spannrades andererseits ausgeglichen werden, sondern auch die übliche Funktion des Kettenspanns kann dann durch die Übertragungseinrichtung mit ihrem Spannrad übernommen werden.

Die Erfindung wird anhand schematischer Zeichnungen eines Ausführungsbeispiels näher erläutert. Es zeigen:
- fig. 1: eine perspektivische Schemadarstellung einer Vierzylinder-Kolbenbrennkraftmaschine mit variabel einstellbarem Brennraum,
- Fig. 2: eine Stirnansicht eines über die Kurbelwelle der Brennkraftmaschine angetriebenen Kettentriebes Abgriff der Stellkraft am Exzenterring,
- Fig. 3: eine Abwandlung der Anordnung gem. Fig. 2 mit Abgriff der Stellkraft am Stellantrieb.

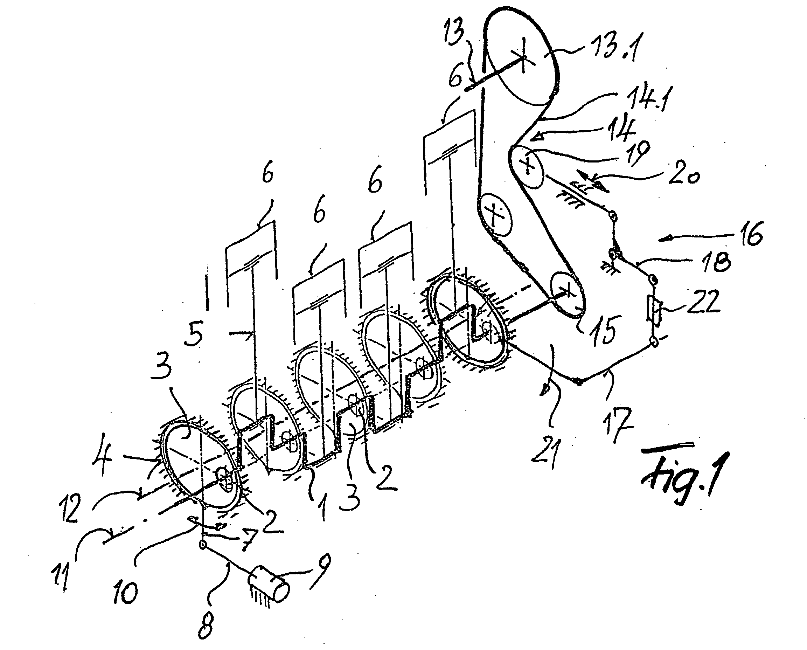

Wie die schematische Darstellung gem. Fig. 1 erkennen läßt, ist eine Kurbelwelle 1 einer Vierzylinder-Kolbenbrennkraftmaschine mit ihren Kurbelwellenlagern 2 in Exzenterringen 3 gelagert, die ihrerseits verdrehbar in entsprechenden Traglagerngehäusen 4 eines angedeuteten Motorgehäuses gelagert sind. Mit der Kurbelwelle 1 sind über Pleuel 5 jeweils die hier nur schematisch angedeuteten Kolben 6 verbunden. Die Kurbelwelle ist in einer Stellung gezeigt, in der zwei Kolben sich in der oberen Totpunktstellung befinden, während sich anderen beiden Kolben in der unteren Totpunktstellung befinden. Zumindest einer der Exzenterringe 3 ist starr mit einem als Schwenkhebel ausgebildeten Verdreheinrichtung 7 verbunden, der jeweils am Traglagergehäuse 4 nach unten herausgeführt ist. Der Schwenkhebel 7 ist über eine Koppelstange 8 oder einem anderen Übertragungsmittel, beispielsweise einem hoch untersetzten Stellgetriebe, mit einem nur schematisch dargestellten Stellantrieb 9 verbunden. Bei einer Betätigung des Stellantriebes kann nun der Schwenkhebel 7 in Richtung des Doppelpfeiles 10 entsprechend hin und her verschwenkt werden, so daß sich durch die Verdrehung der Exzenterringe 3 entsprechend auch jeweils die Position der Drehachse 11 der Kurbelwelle 1 in vertikaler Richtung in bezug auf das Motorgehäuse verändert.

Wie aus Fig. 1 ferner ersichtlich, ist die Drehachse 11 der Kurbelwelle 1 exzentrisch zur Drehachse 12 der Exzenterringe 3 angeordnet. Durch ein Verschwenken des Schwenkhebels 7 über den Stellantrieb 9 kann nun die Drehachse 11 der Kurbelwelle 1 gegenüber der ortsfest im Motorgehäuse angeordneten Verdrehachse 12 der Exzenterringe 3 in ihrer Position angehoben und auch abgesenkt werden. Das bedeutet aber, daß die Kolben 6 jeweils in der oberen Totpunktstellung um das gleiche Maß näher an das Brennraumdach des Zylinders heranreichen, so daß dementsprechend auch das Verdichtungsverhältnis erhöht und bei einer gegenläufigen Verdrehung der Exzenterringe 3 entsprechend vermindert wird.

Eine Kolbenbrennkraftmaschine dieser Art weist mit ihrer Nokkenwelle zur Betätigung der Gaswechselventile mindestens eine weitere im Motorgehäuse ortsfest gelagerte Abtriebswelle 13 auf. In der Regel sind noch weitere Abtriebswellen vorgesehen, durch die Nebenaggregate anzutreiben sind. Die Abtriebswelle 13 wird mit Hilfe eines Kettentriebes 14 angetrieben, der über ein Antriebsrad 15 an der Kurbelwelle 1 und ein Abtriebsrad 13.1 an der Abtriebswelle 13 geführt ist. Da sich bei einer Veränderung des Brennraumes durch eine Positionsänderung der Drehachse 11 der Kurbelwelle 1 gegenüber der Abtriebswelle 13 die Geometrie für den Kettentrieb 14 insgesamt ändert, ist eine Übertragungseinrichtung 16 vorgesehen, die bei dem hier nur schematisch dargestellten Prinzipbeispiel in Form einer Schwenkhebelanordnung ausgestaltet ist.

Die Anwendung der Erfindung ist nicht beschränkt auf einen Kettentrieb im eigentlichen Sinne, sondern kann auch angewendet werden bei einem Zahnriementrieb. Das Spannrad 13 muß nicht notwendigerweise ein Kettenrad sein, sondern kann auch in üblicher Weise als Spannrad ohne Verzahnung ausgebildet sein.

Die Schwenkhebelanordnung weist einen mit dem am Gehäuse angeordneten Exzenterring 3 verbundenen Schwenkhebel 17 auf, der durch eine Übertragungshebelanordnung in Form eines Winkelshebels 18 mit einem Spannrad 19 ist, das quer zum Verlauf eines Kettentrums 14.1 des Kettentriebes 14 bewegbar geführt ist, wie dies durch den Doppelpfeil 20 angedeutet ist. Die Anordnung ist hierbei so getroffen, daß bei einem Verschwenken der Exzenterringe 3 in Richtung des Pfeiles 21 nach unten, also im Sinne einer Vergrößerung des Brennraumes zum Ausgleich der sich dadurch ergebenden Vergrößerung des Abstandes zwischen der Drehachse 11 der Kurbelwelle 1 und der Abtriebswelle 13 durch den Winkelhebel 18 das Spannrad 19 entsprechend der Abstandsänderung zwischen den beiden Drehachse 11 und 13 proportional zurückgezogen wird. Die Schwenkhebelanordnung ist hierbei so ausgestaltet, daß das Spannrad 19 immer am Kettentrum 14.1 anliegt.

Durch ein federndes Dämpfungselement 22, das in einem der Hebel der Übertragungshebelanordnung integriert ist, übernimmt das Spannrad 19 zugleich die Funktion eines Kettenspanners.

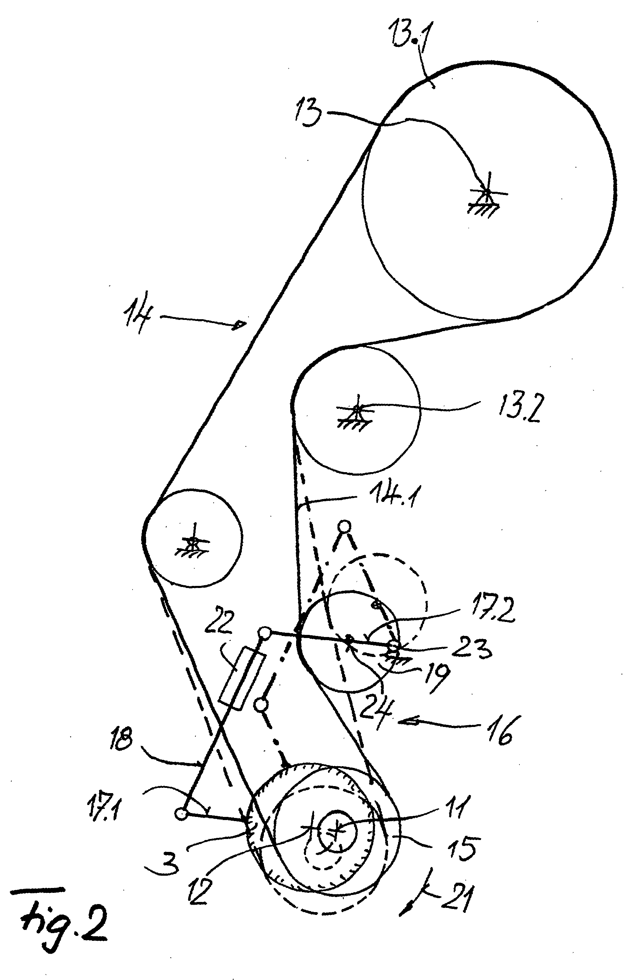

In Fig. 2 ist eine Ausführungsform für eine Übertragungseinrichtung schematisch dargestellt.

Bei dem hier dargestellten Ausführungsbeispiel ist wird den Kettentrieb 16 als Abtriebswelle 13 die Nockenwelle sowie als weitere Abtriebswelle ein Nebenaggregat 13.2 angetrieben. Das mit der Kurbelwelle 1 verbundene Antriebsrad 15 kann nun bei einem Verschwenken des Traglagers 3 in Richtung des Pfeiles 21 nach unten abgesenkt werden. Um hier den notwendigen Ausgleich für die Abstandsänderung zwischen der Drehachse 11 der Kurbelwelle 1 und der Abtriebswelle 13 bzw. 13.2 zu schaffen, ist mit dem Exzenterring 3 eine Parallelhebelanordnung verbunden. Am Exzenterring 3 ist ein erster Schwenkhebel 17.1 fest angeordnet, dem ein Parallelhebel 17.2 zugeordnet ist, der am Motorgehäuse um das Lager 23 schwenkbar gelagert ist. Der Schwenkpunkt für den Schwenkhebel 17.1 ist identisch mit der Drehachse 12 des Exzenterrings 3. Die beiden Parallelhebel 17.1 und 17.2 sind über eine Koppelstange 18 miteinander verbunden, wobei diese Koppelstange 18 das federndes Dämpfungselement 22 enthalten kann oder aber durch dieses gebildet werden kann.

Auf dem Schwenkhebel 17.2 ist das Spannrad 19 gelagert, wobei der Drehpunkt 24 des Spannrades 19 so angeordnet ist, daß bei der vorgesehenen Schwenkbewegung die Abstandsänderung quer zum Kettentrum 14.1 der sich aus der Absenkung des Antriebsrades 15 ergebenden Vergrößerung des Abstandes zwischen der Drehachse 11 der Kurbelwelle 1 und der Drehachse 13 bzw. 13.2 ausgeglichen wird.

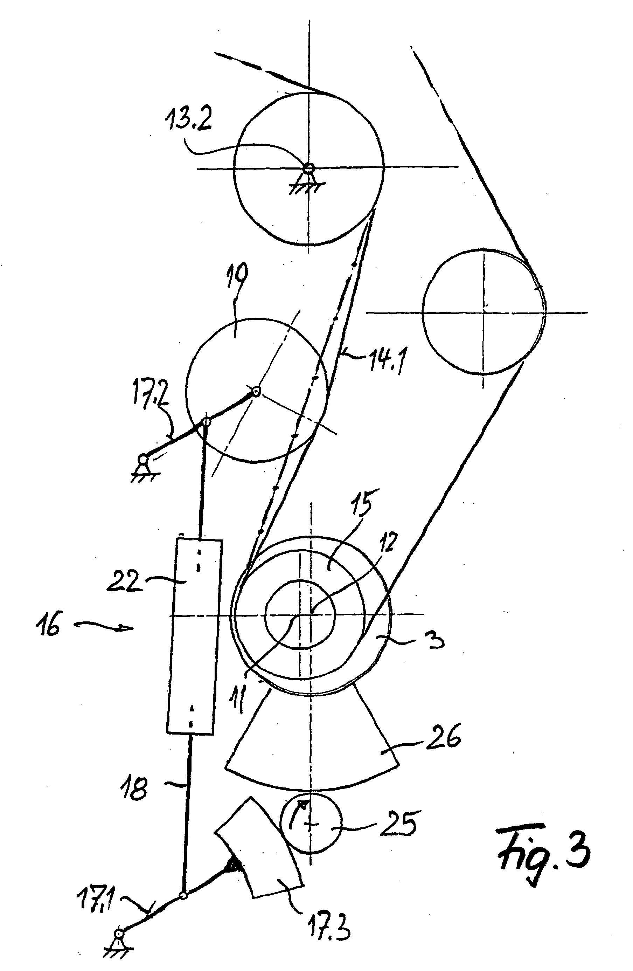

Während bei der Ausführungsform gem. Fig. 2 die auf die Übertragungseinrichtung 16 einwirkenden Stellkräfte unmittelbar von den Exzenterringen abgenommen werden, ist in Fig. 3 eine Anordnung dargestellt, bei der die auf die Übertragungseinrichtung 16 wirkenden Stellkräfte unmittelbar vom Stellantrieb abgenommen werden.

Bei dem hier angedeuteten Ausführungsbeispiel wird der Stellantrieb im wesentlichen durch eine parallel zur Kurbelwelle verlaufende verstellwelle 25 gebildet, die über ein entsprechendes Zahnsegment 26 mit dem Exzenterring 3 verbunden ist.

Analog zur Ausführunsgform gem. Fig. 2 ist die Übertragungseinrichtung 16 als viergliedriges Hebelgetriebe ausgebildet. Gleiche Bauelemente sind hier mit gleichen Bezugszeichen versehen. Hierbei steht der Schwenkhebel 17.1 über ein Zahnsegment 17.3 mit einem auf der Verstellwelle 25 angeordneten Ritzel in Verbindung, wobei die Bewegungsebene der Übertragungseinrichtung 16 in gleicher Weise, wie bei der Anordnung gem. Fig. 2, mit entsprechendem Abstand vor der Bewegungsebene der Exzentrringverstellung angeordnet ist. Wird die Verstellwelle 25 in Richtung des Pfeiles verdreht, so wird über den Exzenterring 3 die Drehachse 11 abgesenkt, so daß sich der Abstand zu den feststehenden Achsen, beispielsweise zur Achse 13.2 vergrößert. Da das Zahnsegment 17.3 der Übertragungseinrichtung 16 ebenfalls mit der Verstellwelle 25 im Eingriff steht, wird bei gleicher Drehrichtung das Spannrad 19 nach oben bewegt, so daß die sich ergebende Streckung des Kettentrums 14.1 ausgeglichen wird.

## Patentansprüche

1. Kolbenbrennkraftmaschine mit in Reihe in einem Motorgehäuse angeordneten Zylindern und mit Kolben (6), die über Pleuel (5) mit der Kurbelwelle (1) verbunden sind, deren Lager (2) in Exzenterringen (3) angeordnet sind, die ihrerseits in Traglagern (4) im Motorgehäuse verdrehbar gelagert sind und mit einem Stellantrieb (9) zur Veränderung der Position der Drehachse (11) der Kurbelwelle (1) in bezug auf das Motorgehäuse in Verbindung stehen, wobei im Motorgehäuse mindestens eine mit einem Antriebsrad (13.1) verbundene ortsfeste Abtriebswelle (13) vorgesehen ist, die achs-parallel zur Kurbelwelle (1) ausgerichtet ist, ferner mit einem Kettentrieb (14) zum Antrieb der Abtriebswelle (13), der über ein mit der Kurbelwelle verbundenes Antriebsrad (15) und das Abtriebsrad (13.1) geführt ist, und mit einer mit einem Stellantrieb gekoppelten Übertragungseinrichtung (16), die ein zwischen dem Antriebsrad (15) und dem Abtriebsrad (13.1) mit dem Kettentrieb (14) in Eingriff stehendes Spannrad (19) aufweist, das proportional zur Positionsänderung der Kurbelwelle (1) gegenüber der ortsfesten Abtriebswelle (13) quer zum Verlauf eines Kettentrums (14.1) des Kettentriebes (14) bewegbar geführt ist.

2. Kolbenbrennkraftmaschine nach Anspruch 1, **dadurch gekennzeichnet, daß** die Übertragungseinrichtung (16) mit einem eigenen Stellantrieb geführt wird, der entsprechend der Verstellung des Stellantriebes (9) zur Veränderung der Position der Kurbelwelle nachgeführt wird.

3. Kolbenbrennkraftmaschine nach Anspruch 1, **dadurch gekennzeichnet, daß** die Übertragungseinrichtung (16) mit dem Stellantrieb (9) zur Veränderung der Position der Drehachse (11) der Kurbelwelle (1) gekoppelt ist.

4. Kolbenbrennkraftmaschine nach Anspruch 3, **dadurch gekennzeichnet, daß** die Übertragungseinrichtung (16) mit einem Exzenterring (3) mechanisch gekoppelt ist.

5. Kolbenbrennkraftmaschine nach einem der Ansprüche 3 oder 4, **dadurch gekennzeichnet, daß** die Übertragungseinrichtung (16) durch eine Schwenkhebelanordnung gebildet wird, bei der die Schwenkbewegung vom Stellantrieb (9) zur Veränderung der Position der Kurbelwelle (1) oder von einem Exzenterring (3) abgenommen wird.

6. Kolbenbrennkraftmaschine nach einem der Ansprüche 1 bis 5, **dadurch gekennzeichnet, daß** zwischen Spannrad (19) und Übertragungseinrichtung (16) ein federndes Dämpfungselement (22) angeordnet ist.

## Claims

1. A piston-type internal combustion engine having cylinders that are disposed in series in an engine housing, and pistons (6) that are connected by way of connecting rods (5) to a crankshaft (1) whose bearings (2) are disposed in eccentric rings (3), which are in turn rotatably seated in support bearings (4) in said engine housing and connected to an adjusting drive (9) for changing the position of the axis of rotation (11) of said crankshaft (1) relative to said engine housing, wherein at least one stationary power take-off shaft (13) connected to a power take-off wheel (13.1) is disposed in said engine housing and oriented with its axis parallel to the axis of said crankshaft (1); said engine further having a chain drive (14) for driving said power take-off shaft (13), said drive being guided by way of a driving wheel (15) connected to said crankshaft and by way of said power take-off wheel (13.1); and having a transmission device (16), which is coupled with an adjusting drive and has a clamping wheel (19) between said driving wheel (15) and said power take-off wheel (13.1), that engages said chain drive (14) and is guided to move transversely to the path of a chain strand (14.1) of said chain drive (14), proportionally to the change in position of said crankshaft (1) relative to said stationary power take-off shaft (13).

2. A piston-type internal combustion engine according to claim 1, **characterized in that** said transmission device (16) is guided by a dedicated adjusting drive which follows corresponding to the adjustment of said adjusting drive (9) for changing the position of said crankshaft.

3. A piston-type internal combustion engine according to claim 1, **characterized in that** said transmission device (16) is coupled with said adjusting drive (9) for changing the position of said axis of rotation (11) of said crankshaft (1).

4. A piston-type internal combustion engine according to claim 3, **characterized in that** said transmission device (16) is mechanically coupled with an eccentric ring (3).

5. A piston-type internal combustion engine according to claim 3 or 4, **characterized in that** said transmission device (16) is formed by a pivot-lever arrangement, in which the pivoting movement is taken from said adjusting drive (9) for changing the position of said crankshaft (1) or from an eccentric ring (3).

6. A piston-type internal combustion engine according to any of the claims 1 through 5, **characterized in that** a resilient damping element (22) is disposed between said clamping wheel (19) and said transmission device (16).

## Revendications

1. Moteur à combustion interne à piston comprenant des cylindres placés en série dans un carter de moteur et des pistons (6) qui sont reliés par l'intermédiaire de bielles (5) au vilebrequin (1) et dont les paliers (2) sont placés dans des anneaux excentriques (3), qui, de leur côté, sont logés de manière rotative dans des paliers d'appui (4) du carter de moteur et qui sont reliés à un actionneur (9) afin de modifier la position de l'axe de rotation (11) du vilebrequin (1) par rapport au carter de moteur, au moins un arbre de sortie (13) stationnaire relié à une roue de sortie (13.1) étant prévu dans le carter de moteur, cet arbre de sortie étant dirigé parallèlement à l'axe du vilebrequin (1), comprenant de plus une transmission par chaîne (14) permettant d'entraîner l'arbre de sortie (13) et qui est guidée à l'aide d'une roue motrice (15) reliée au vilebrequin et à l'aide de la roue de sortie (13.1), et comprenant également un dispositif de transmission (16) couplé à un actionneur, qui présente une roue de serrage (19) maintenue en prise avec la transmission par chaîne (14) entre la roue motrice (15) et la roue de sortie (13.1), cette roue de serrage étant guidée de manière mobile transversalement au trajet d'un brin de chaînes (14.1) de la transmission par chaîne (14), proportionnellement au changement de position du vilebrequin (1) par rapport à l'arbre de sortie (13) stationnaire.

2. Moteur à combustion interne à piston selon la revendication 1, **caractérisé en ce que** le dispositif de transmission (16) est guidé par un actionneur propre, qui est régulé pour changer la position du vilebrequin en correspondance avec le positionnement de l'actionneur (9).

3. Moteur à combustion interne à piston selon la 5 revendication 1, **caractérisé en ce que** le dispositif de transmission (16) est couplé à l'actionneur (9) pour changer la position de l'axe de rotation (11) du vilebrequin (1).

4. Moteur à combustion interne à piston selon la 10 revendication 3, **caractérisé en ce que** le dispositif de transmission (16) est couplé de manière mécanique à un anneau excentrique (3).

5. Moteur à combustion interne à piston selon l'une quelconque des revendications 3 ou 4, **caractérisé en ce que** le dispositif de transmission (16) est formé par un agencement à levier pivotant dans lequel le mouvement pivotant est pris par l'actionneur (9) pour changer la position du vilebrequin (1) ou par un anneau excentrique (3).

6. Moteur à combustion interne à piston selon l'une quelconque des revendications 1 a 5, **caractérisé en ce qu'**un élément d'amortissement élastique (22) est placé entre la roue de serrage (19) et le dispositif de transmission (16).
